# FASCICULE DE BREVET EUROPEEN

(11) **EP 3 755 985 B1**
(45) Date de publication et mention de la délivrance du brevet: **30.03.2022**
(21) Numéro de dépôt: 19711958.9
(22) Date de dépôt: 12.02.2019
(51) Int. Cl.: G01M 7/02

(54) **ROTOR POUR TURBOMACHINE ET TURBOMACHINE COMPRENANT CE ROTOR**
ROTOR FÜR TURBINENMOTOR UND TURBINENMOTOR MIT DIESEM ROTOR
ROTOR FOR TURBINE ENGINE AND TURBINE ENGINE COMPRISING THIS ROTOR

(30) Priorité: 20.02.2018 FR 1851432
(43) Date de publication de la demande: 30.12.2020
(73) Titulaire: ArianeGroup SAS, 78130 Les Mureaux (FR)
(72) Inventeur: LOISEAU, Cyril, Bernard, 78270 BLARU (FR); BRIAL, Alexandre, Michel, Stéphane, 27950 SAINT MARCEL (FR); BOUFFLERT, Sébastien, 27400 LOUVIERS (FR); MOSER, François, André, Adrien, 27690 LERY (FR)
(74) Mandataire: Cabinet Beau de Loménie
(86) Numéro de dépôt international: PCT/FR2019/050297
(87) Numéro de publication internationale: WO 2019/162593

(56) Documents cités:
- EP-A1- 2 997 345
- CN-A- 105 928 676
- JP-A- 2003 270 081

## Description

### DOMAINE DE L'INVENTION

Le présent exposé concerne un rotor pour turbomachine et une turbomachine comprenant ce rotor.

### ARRIÈRE-PLAN TECHNOLOGIQUE

Dans le domaine des turbomachines, notamment aéronautiques ou aérospatiales, la recherche du meilleur rendement possible au moindre coût est une préoccupation constante des constructeurs.

En vue d'obtenir le meilleur rendement possible, le profil aérodynamique ou hydraulique des pales du rotor de la turbomachine est le plus souvent conçu pour être optimal à un point de fonctionnement particulier de la turbomachine, lequel point de fonctionnement est généralement un point de fonctionnement nominal de la turbomachine.

Afin de garantir l'intégrité structurelle de la turbomachine, les sollicitations dynamiques que subit la turbomachine à ce point de fonctionnement nominal sont étudiées très soigneusement, et ce afin de garantir qu'il n'existe aucune fréquence propre de la turbomachine qui pourrait être excitée à ce point de fonctionnement nominal.

Toutefois, en utilisation réelle, la turbomachine doit passer par une phase de montée en régime entre l'arrêt complet et le point de fonctionnement nominal.

Jusqu'ici, il s'est avéré extrêmement difficile, et même souvent impossible, de garantir qu'aucune fréquence propre de la turbomachine n'existe entre l'arrêt complet et le point de fonctionnement nominal. En pratique, on est donc contraint de permettre à la turbomachine de subir très brièvement, pendant cette phase de montée en régime, des excitations vibratoires liées au passage par une ou plusieurs fréquences propres de la turbomachine. Pour garantir que l'intégrité structurelle de la turbomachine n'est pas compromise par ces excitations vibratoires, on est contraint de procéder à des essais partiels, par exemple de type « ping-test » et/ou réponse forcée, et à des essais de fonctionnement de la turbomachine complète. Ces essais sont très coûteux en temps et en argent, au moins parce qu'ils nécessitent l'utilisation de bancs d'essai dédiés. La demande de brevet CN-105928676 divulgue par exemple un banc d'essai pour mesurer le comportement vibratoire et l'amortissement d'un rotor avec des aubes ayant une fréquence propre différente.

Il existe donc un réel besoin pour un nouveau type de turbomachine qui permette de limiter le nombre des essais mentionnés ci-dessus, voire même de les éviter entièrement.

### PRÉSENTATION DE L'INVENTION

À cet effet, le présent exposé concerne un rotor pour turbomachine comprenant :
un disque apte à être monté sur un arbre de la turbomachine ; et
une pluralité de pales fixées au disque,
dans lequel :
   chaque pale de la pluralité de pales est fixée au disque via une structure maillée configurée de sorte qu'un effort de traction appliqué à la structure maillée induise un changement de l'angle d'incidence de la pale ; et
   les pales et les structures maillées sont configurées de sorte que lorsque le rotor est immobile, la répartition des angles d'incidence des pales autour du disque est apériodique.

Le fait que la répartition des angles d'incidence des pales autour du disque soit apériodique lorsque le rotor est immobile désaccorde la structure constituée du disque et des pales et tend ainsi à diminuer le nombre de modes propres critiques, excitables par de faibles niveaux d'énergie. Ainsi, le nombre de phases d'excitation vibratoires que traverse la turbomachine pendant sa phase de montée en régime et l'amplitude des réponses dynamiques correspondantes peuvent être diminués, ce qui diminue d'autant le nombre d'essais à réaliser pour garantir l'intégrité structurelle de la turbomachine. Il est même possible qu'aucune fréquence propre du rotor n'existe pendant cette phase de montée en régime, auquel cas aucun essai de ce type n'est à réaliser. Le coût total du rotor et de la turbomachine est donc diminué.

On notera en outre que, en raison de la configuration particulière des structures maillées, le changement d'angle d'incidence des pales s'effectue de lui-même, grâce à l'effort centrifuge dû la vitesse de rotation du rotor, à mesure que cette vitesse de rotation augmente. Il n'est donc aucunement nécessaire de prévoir un système mécanique de commande de l'angle d'incidence des pales. En outre, le l'angle d'incidence des pales étant directement lié à la vitesse de rotation du rotor, il n'est pas nécessaire de prévoir de système d'asservissement supplémentaire pour commander la vitesse de rotation du rotor en fonction du point de fonctionnement désiré de la turbomachine. Il en résulte un gain en coût et en simplicité de la turbomachine, et aussi un gain en fiabilité, car le nombre de systèmes à prévoir dans la turbomachine est plus faible. Ceci est particulièrement avantageux lorsque la turbomachine est une turbopompe à ergol cryogénique ou une pompe pour turbopompe à ergol cryogénique.

Dans certains modes de réalisation, les pales et les structures maillées sont configurées de sorte que, lorsque le rotor est immobile, les angles d'incidence des pales sont fixés à une valeur choisie parmi deux valeurs prédéterminées.

Dans certains modes de réalisation, les pales et les structures maillées sont configurées de sorte que, lorsque le rotor est immobile, les angles d'incidence des pales sont fixés à une valeur choisie parmi trois valeurs prédéterminées.

Le nombre d'angles d'incidence possibles étant limité, la fabrication du rotor est simplifiée.

Dans certains modes de réalisation, les pales et les structures maillées sont configurées de sorte que, lorsque le rotor est immobile, les angles d'incidence des pales sont tous différents les uns des autres.

De cette manière, le rotor ne présente aucune symétrie qui pourrait donner lieu à l'apparition d'une fréquence propre de la turbomachine imputable aux pales. Il est donc plus aisé encore de garantir qu'aucune fréquence propre de la turbomachine n'existe pendant la phase de montée en régime.

Dans certains modes de réalisation, les pales et les structures maillées sont configurées de sorte que, lorsque le rotor tourne à une vitesse de rotation prédéterminée, les angles d'incidence des pales sont identiques.

Le fait que les angles d'incidence des pales soient identiques à la vitesse de rotation prédéterminée permet d'obtenir un rendement optimal à cette vitesse de rotation prédéterminée, laquelle peut être choisie pour correspondre à un point de fonctionnement nominal de la turbomachine.

Dans certains modes de réalisation, le rotor est fabriqué d'un seul tenant par fabrication additive.

Ceci permet de diminuer le nombre d'opérations nécessaire à la fabrication du rotor, ce qui est intéressant du point de vue économique et industriel.

Dans certains modes de réalisation, le rotor est fabriqué d'un seul tenant par fusion sur lit de poudres d'un unique alliage métallique.

Ceci permet de simplifier la conception et la mise en œuvre de la fabrication du rotor.

Le présent exposé concerne aussi une turbomachine comprenant le rotor de turbomachine décrit ci-dessus.

La turbomachine peut être une turbine pour turbopompe à ergol cryogénique ou une pompe pour turbopompe à ergol cryogénique.

La turbomachine peut être une turbine ou un compresseur pour turboréacteur ou turbopropulseur.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 est une vue en perspective d'une turbomachine comprenant un rotor ;
- la figure 2A est une vue de face du détail II de la figure 1 lorsque la turbomachine est à l'arrêt et le rotor est immobile ;
- la figure 2B est une vue de dessus de la figure 2A ;
- la figure 2C est une vue analogue à la figure 2B lorsque la turbomachine est en fonctionnement et le rotor tourne à une vitesse de rotation prédéterminée ;
- la figure 3A est une vue illustrant schématiquement la configuration d'une structure maillée présente dans le rotor ;
- la figure 3B est un graphe représentant schématiquement la relation entre un effort de traction appliqué à la structure maillée de la figure 3A et l'angle de rotation induit par cet effort de traction.

### DESCRIPTION DÉTAILLÉE DE L'INVENTION

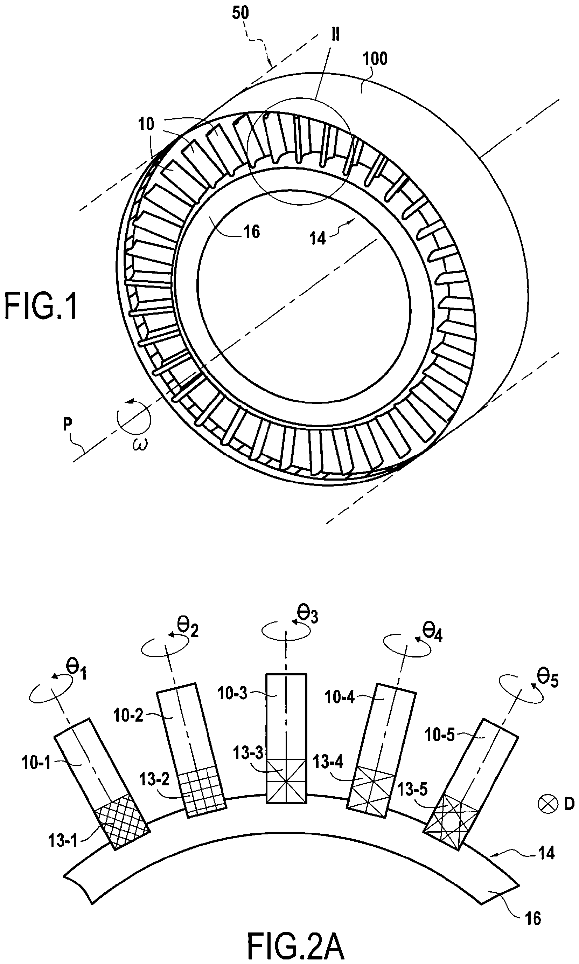

Un mode de réalisation d'une turbomachine comprenant un rotor va être décrit en référence aux figures 1 à 3.

La figure 1 représente en perspective une turbomachine 50. De manière connue, la turbomachine 50 comprend un carter 100 et un rotor 14 disposé à l'intérieur du carter 100. Le rotor 14 comprend un disque 16 apte à être monté sur un arbre (non représenté) de la turbomachine 50, de sorte que le disque 16 (et par conséquent le rotor 14) peuvent tourner à une vitesse de rotation ω autour d'un axe principal P de la turbomachine 50.

De manière connue, le rotor 14 comprend aussi une pluralité de pales 10 fixées au disque 16, typiquement le long de toute la circonférence du disque 16. Il en résulte que, lorsque le rotor 14 tourne autour de l'axe principal P, un échange d'énergie se produit entre le rotor 14 d'une part, et un fluide de travail s'écoulant au sein de la turbomachine 50 dans une direction d'écoulement D d'autre part. Selon le sens de cet échange d'énergie, la turbomachine 50 fournit de l'énergie au fluide de travail ou reçoit de l'énergie du fluide de travail. On précise ici que, au sens du présent exposé, le terme « turbomachine » englobe aussi bien les turbomachines fournissant de l'énergie à un fluide de travail (telles que les pompes ou les compresseurs) que les turbomachines recevant de l'énergie d'un fluide de travail (telles que les turbines). On précise encore ici que le terme « fluide » englobe tout type de fluide, y compris un gaz ou un mélange de gaz. La turbomachine 50 peut notamment être une turbine pour turbopompe à ergol cryogénique, ou une pompe pour turbopompe à ergol cryogénique, ou une turbine ou un compresseur pour turboréacteur ou turbopropulseur.

Chaque pale 10 est fixée au disque 16 via une structure maillée 13. Les structures maillées (également connues sous le nom de « lattice structures » en anglais) sont connues en soi. On rappelle seulement ici qu'une structure maillée est un élément structurel, souvent métallique, qui comprend un réseau de mailles, lequel réseau est obtenu par répétition périodique d'un ou plusieurs motifs. Ces structures maillées permettent de conférer des propriétés mécaniques particulières, de par leurs orientations préférentielles (anisotropies locales), et présentent une bonne résistance à l'endommagement.

Les méthodes de fabrication de structures maillées sont connues en soi. On connaît notamment des méthodes de fabrication par pliage ou par tissage. On pourra par exemple se référer au document « Multifunctional periodic cellular metals », H.N.G Wadley, Phil. Trans. R. Soc. A 2006 364 31-68 (DOI: 10.1098/rsta.2005.1697). Les structures maillées peuvent également être fabriquées par des méthodes de fabrication additive. On pourra par exemple se référer à l'ouvrage « Cellular Design for Laser Freeform Fabrication », O. Rehme, Cuvillier Verlag, 2010 (ISBN: 9783869552736), ou au document « Design and Development of Cellular Structure for Additive Manufacturing », N.P. Biranchi, thèse, National Institute of Technology Rourkela, 2015.

Chaque structure maillée 13 du rotor 14 est configurée de sorte qu'un effort de traction appliqué à la structure maillée 13 induise un changement de l'angle d'incidence de la pale 10 correspondante. On rappelle que, dans une turbomachine, l'angle d'incidence d'une pale est l'angle entre le profil aérodynamique ou hydrodynamique de la pale et la direction d'écoulement du fluide de travail au sein de la turbomachine. Dans le cas présent, l'angle d'incidence (noté dans la suite θ) de la pale 10 est donc l'angle entre le profil de la pale 10 et la direction d'écoulement D.

Les structures maillées capables de transformer un effort de traction en un changement d'angle sont connues en soi.

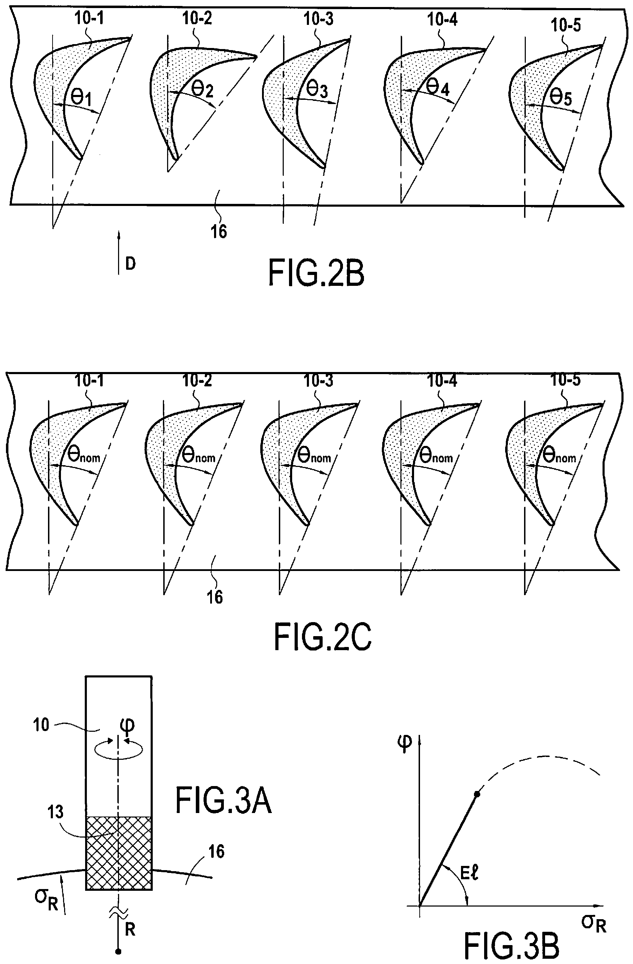

La figure 3A illustre schématiquement la configuration d'une structure maillée 13. La structure maillée 13 est fixée à son extrémité proximale au disque 16, et à son extrémité distale à une pale 10, de sorte que, comme indiqué précédemment, la pale 10 est fixée au disque 16 via la structure maillée 13. Lorsque le disque 16 tourne autour de l'axe principal P, l'extrémité proximale subit un effort de traction σ_{R} dû à la force centrifuge s'exerçant sur le disque 16, lequel effort de traction σ_{R} est proportionnel au carré de la vitesse de rotation ω du disque 16 (c'est-à-dire que σ_{R} est proportionnel à ω²). Grâce à la configuration de la structure maillée 13, en raison de l'effort de traction σ_{R}, l'extrémité distale subit une rotation d'angle ϕ. Cette rotation se produit le plus souvent autour de l'axe R reliant l'axe principal P à la structure maillée 13. En tout état de cause, en raison de cette rotation, l'angle d'incidence θ de la pale 10 est modifié.

Comme cela est connu pour les structures maillées du type décrit ici, l'angle de rotation ϕ est d'autant plus grand que l'effort de traction σ_{R} est grand, comme représenté sur la figure 3B. En outre, comme représenté sur la figure 3B, il existe en général une plage d'effort de traction σ_{R} (représentée en trait plein sur le graphe de la figure 3B) dans laquelle l'angle de rotation ϕ est proportionnel à l'effort de traction σ_{R}. Le coefficient de proportionnalité (aussi connu sous le nom de « raideur ») est noté ici Et.

Les pales et les structures maillées du rotor 14 sont configurées de sorte que, lorsque le rotor 14 est immobile (autrement dit lorsque ω = 0), la répartition des angles d'incidence des pales autour du disque 16 est apériodique. Au sens du présent exposé, le fait que la répartition des angles d'incidence des pales autour du disque 16 est apériodique signifie que, lorsque l'on considère successivement les N pales 10-1, ..., 10-N du disque 16 en parcourant la circonférence du disque 16 dans un sens donné, la suite θ1, ..., θN des angles d'incidence de chaque pale considérée n'est pas une suite périodique. Ainsi, si, lorsque le rotor 14 est immobile, toutes les pales présentent le même angle d'incidence, ou bien toutes les pales présentent alternativement deux angles d'incidence distincts θA, θB, la répartition des angles d'incidence des pales autour du disque 16 n'est pas apériodique. Inversement, à titre d'illustration, si le disque 16 présente cinq pales 10-A, 10-B, 10-C, 10-D, 10-E présentant des angles d'incidence θA, θB, θC, θD, θE lorsque le rotor 14 est immobile avec θA = θC et θA, θB, θD, θE tous distincts entre eux, alors la répartition des angles d'incidence des pales 10-A, 10-B, 10-C, 10-D, 10-E autour du disque 16 est apériodique.

Le fait que la répartition des angles d'incidence des pales 10-1, ..., 10-N autour du disque 16 soit apériodique lorsque le rotor est immobile tend à diminuer le nombre de modes propres critiques de la turbomachine 50, excitables par de faibles niveaux d'énergie. Ainsi, le nombre de phases d'excitation vibratoires que traverse la turbomachine 50 pendant sa phase de montée en régime peut être diminué, ce qui diminue d'autant le nombre d'essais à réaliser pour garantir l'intégrité structurelle de la turbomachine 50. Le coût total du rotor 14 et de la turbomachine 50 est donc diminué.

On notera que l'angle d'incidence de chaque pale 10-1, ..., 10-N lorsque le rotor 14 est immobile peut être modifié en changeant la structure du réseau de la structure maillée 13-1, ..., 13-N correspondante, la raideur Eℓ de la structure maillée 13-1, ..., 13-N correspondante, la position de la pale 10-1 ..., 10-N par rapport à la structure maillée 13-1, ..., 13-N correspondante, l'orientation spatiale de la structure maillée 13-1, ..., 13-N correspondante, ou une combinaison de ces grandeurs.

Dans certains modes de réalisation, les pales et les structures maillées du rotor 14 sont configurées de sorte que, lorsque le rotor 14 est immobile, les angles d'incidence des pales sont fixés à une valeur choisie parmi deux ou trois valeurs prédéterminées, pourvu que la répartition des angles d'incidence des pales autour du disque 16 soit toujours apériodique. Le nombre d'angles d'incidence possibles étant limité, la fabrication du rotor 14 est simplifiée.

Dans d'autres modes de réalisation, les pales et les structures maillées du rotor 14 sont configurées de sorte que, lorsque le rotor 14 est immobile, les angles d'incidence des pales sont tous différents les uns des autres.

Les figures 2A et 2B illustrent schématiquement un tel mode de réalisation. Ainsi, sur ces figures, on a représenté cinq pales 10-1, 10-2, 10-3, 10-4, 10-5 chacune fixée au disque 16 via une structure maillée 13-1, 13-2, 13-3, 13-4, 13-5. Lorsque le rotor 14 est immobile (autrement dit lorsque ω = 0), les angles d'incidence θ1, θ2, θ3, θ4, θ5 des pales 10-1, 10-2, 10-3, 10-4, 10-5 sont tous différents les uns des autres. Il va sans dire le rotor 14 peut comprendre un nombre quelconque de pales, ce nombre étant souvent en pratique bien supérieur à cinq. Dans certains modes de réalisation, les raideurs Eℓ des structures maillées 13-1, 13-2, 13-3, 13-4, 13-5 peuvent être toutes différentes les uns des autres.

Dans les modes de réalisation décrits ci-dessus, les pales et les structures maillées du rotor 14 peuvent être configurées de sorte que, comme représenté sur la figure 2C, lorsque le rotor 14 tourne à une vitesse de rotation ω prédéterminée, les angles d'incidence des pales sont identiques, c'est-à-dire tous égaux à une valeur prédéterminée θnom. Ainsi, à la vitesse de rotation ω prédéterminée, l'écoulement du fluide de travail est homogène et le rendement est optimal.

Dans certains modes de réalisation, les pales et les structures maillées du rotor 14 sont configurées de sorte qu'aucune fréquence propre de la turbomachine 50 n'existe à une vitesse de rotation inférieure à la vitesse de rotation ω prédéterminée. La vitesse de rotation ω prédéterminée peut être choisie pour correspondre à un point de fonctionnement particulier de la turbomachine 50, lequel est par exemple un point de fonctionnement nominal de la turbomachine 50. La valeur prédéterminée θnom peut être choisie pour assurer un rendement optimal à ce point de fonctionnement.

Dans les modes de réalisation décrits ci-dessus, toutes les pales 10 du rotor 14 sont fixées au disque 16 via une structure maillée 13. Toutefois, dans certains modes de réalisation, certaines pales du rotor 14 peuvent ne pas être fixées au disque 16 via une structure maillée, tant que les pales qui sont fixées au disque 16 via une structure maillée sont telles que, lorsque le rotor 14 est immobile, la répartition des angles d'incidence de ces pales autour du disque 16 est apériodique.

Le rotor 14 peut être fabriqué d'un seul tenant par fabrication additive. Lorsque le rotor 14 est fabriqué d'un seul tenant par fabrication additive, l'impact des structures maillées 13 sur la masse totale du rotor 14 est diminué.

Dans certains modes de réalisation, le rotor 14 est fabriqué d'un seul tenant par fusion sur lit de poudres, de préférence par fusion sur lit de poudres d'un unique alliage métallique. Les méthodes de fabrication additive par fusion sur lit de poudres sont connues en soi. Il peut s'agir par exemple d'une fusion sélective par laser (désignée par les appellations « Selective Laser Melting » (SLM), « Direct Metal Laser Sintering » (DLMS), et « Layer Beam Melting » (LBM) en anglais), d'une fusion par faisceau d'électrons (« Electron Beam Melting » (EBM) en anglais), ou encore de méthodes dérivées.

Dans certains modes de réalisation, le rotor 14 est fabriqué d'un seul tenant par frittage sélectif par laser. Les méthodes de frittage sélectif par laser (désignées par l'appellation « Selective Laser Sintering » (SLS) en anglais) sont connues en soi. Par exemple, le rotor 14 est fabriqué d'un seul tenant par frittage sélectif par laser d'un unique alliage métallique sous forme de poudre.

En fabriquant le rotor 14 d'un seul tenant par fabrication additive, il n'est plus nécessaire de fixer individuellement les pales 10 au disque 16 comme dans les rotors conventionnels. On diminue donc le nombre d'opérations nécessaire à sa fabrication, ce qui est intéressant du point de vue économique et industriel. De préférence, les mailles des structures maillées 13 sont autoportantes, c'est-à-dire réalisables par fabrication additive sans qu'il ne soit nécessaire de prévoir des supportages sous les mailles (autrement dit, pendant la fabrication additive, les mailles servent elles-mêmes de support). Dans ce cas, le nombre d'opérations nécessaire à la fabrication du rotor 14 est encore diminué, puisqu'il n'est pas nécessaire de retirer des supportages après la fabrication du rotor 14.

Le fait de fabriquer le rotor 14 entier par fusion sur lit de poudres d'un unique alliage métallique permet de simplifier la conception et la mise en œuvre de la fabrication du rotor 14, notamment parce qu'il n'est pas nécessaire de tenir compte des différences de propriétés mécaniques et de points de fusion de différents alliages métalliques.

L'alliage métallique peut être tout alliage adapté pour la réalisation d'un rotor pour turbomachine. Par exemple, l'alliage métallique est un acier, un acier inoxydable, un alliage à base de nickel (Ni), par exemple un alliage de type Inconel^{®}, ou bien un alliage à base de titane (Ti), par exemple le Ti6Al4V.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Rotor (14) pour turbomachine (50), comprenant :
un disque (16) apte à être monté sur un arbre de la turbomachine (50) ; et
une pluralité de pales (10-1, 10-2, 10-3, 10-4, 10-5) fixées au disque (16),
le rotor étant **caractérisé en ce que** :
chaque pale (10-1, 10-2, 10-3, 10-4, 10-5) de la pluralité de pales est fixée au disque (16) via une structure maillée (13-1, 13-2, 13-3, 13-4, 13-5) configurée de sorte qu'un effort de traction appliqué à la structure maillée induise un changement de l'angle d'incidence de la pale (10-1, 10-2, 10-3, 10-4, 10-5) ; et **en ce que**
les pales (10-1, 10-2, 10-3, 10-4, 10-5) et les structures maillées (13-1, 13-2, 13-3, 13-4, 13-5) sont configurées de sorte que lorsque le rotor (14) est immobile, la répartition des angles d'incidence (θ1, θ2, θ3, θ4, θ5) des pales (10-1, 10-2, 10-3, 10-4, 10-5) autour du disque (16) est apériodique.

2. Rotor selon la revendication 1, dans lequel les pales (10-1, 10-2, 10-3, 10-4, 10-5) et les structures maillées (13-1, 13-2, 13-3, 13-4, 13-5) sont configurées de sorte que, lorsque le rotor (14) est immobile, les angles d'incidence des pales sont fixés à une valeur choisie parmi deux valeurs prédéterminées.

3. Rotor selon la revendication 1, dans lequel les pales (10-1, 10-2, 10-3, 10-4, 10-5) et les structures maillées (13-1, 13-2, 13-3, 13-4, 13-5) sont configurées de sorte que, lorsque le rotor (14) est immobile, les angles d'incidence des pales sont fixés à une valeur choisie parmi trois valeurs prédéterminées.

4. Rotor selon la revendication 1, dans lequel les pales (10-1, 10-2, 10-3, 10-4, 10-5) et les structures maillées (13-1, 13-2, 13-3, 13-4, 13-5) sont configurées de sorte que, lorsque le rotor (14) est immobile, les angles d'incidence des pales sont tous différents les uns des autres.

5. Rotor selon l'une quelconque des revendications 1 à 4, dans lequel les pales (10-1, 10-2, 10-3, 10-4, 10-5) et les structures maillées (13-1, 13-2, 13-3, 13-4, 13-5) sont configurées de sorte que lorsque le rotor (14) tourne à une vitesse de rotation (ω) prédéterminée, les angles d'incidence (θ1, θ2, θ3, θ4, θ5) des pales (10-1, 10-2, 10-3, 10-4, 10-5) sont identiques.

6. Rotor selon l'une quelconque des revendications 1 à 5, dans lequel le rotor (14) est fabriqué d'un seul tenant par fabrication additive.

7. Rotor selon la revendication 6, dans lequel le rotor (14) est fabriqué d'un seul tenant par fusion sur lit de poudres d'un unique alliage métallique.

8. Turbomachine (50) comprenant un rotor (14) selon l'une quelconque des revendications 1 à 7.

9. Turbomachine selon la revendication 8, laquelle turbomachine est une turbine pour turbopompe à ergol cryogénique ou une pompe pour turbopompe à ergol cryogénique.

10. Turbomachine selon la revendication 8, laquelle turbomachine est une turbine ou un compresseur pour turboréacteur ou turbopropulseur.

## Patentansprüche

1. Rotor (14) für eine Turbomaschine (50), umfassend:
eine Scheibe (16), die geeignet ist, auf einer Welle der Turbomaschine (50) montiert zu werden, und
eine Vielzahl von Schaufeln (10-1, 10-2, 10-3, 10-4, 10-5), die an der Scheibe (16) befestigt sind,
wobei der Rotor **dadurch gekennzeichnet ist, dass**:
jede Schaufel (10-1, 10-2, 10-3, 10-4, 10-5) der Vielzahl von Schaufeln an der Scheibe (16) über eine Maschenstruktur (13-1, 13-2, 13- 3, 13-4, 13-5) befestigt ist, welche derart ausgelegt ist, dass eine auf die Maschenstruktur ausgeübte Zugkraft zu einer Änderung des Anstellwinkels der Schaufel (10-1, 10-2, 10-3, 10-4, 10-5) führt, und dass
die Schaufeln (10-1, 10-2, 10-3, 10-4, 10-5) und die Maschenstrukturen (13-1, 13-2, 13-3, 13-4, 13-5) derart ausgelegt sind, dass bei stillstehendem Rotor (14) die Verteilung der Anstellwinkel (θ1, θ2, θ3, θ4, θ5) der Schaufeln (10-1, 10-2, 10-3, 10-4, 10 -5) um die Scheibe (16) herum aperiodisch ist.

2. Rotor nach Anspruch 1, wobei die Schaufeln (10-1, 10-2, 10-3, 10-4, 10-5) und die Maschenstrukturen (13-1, 13-2, 13-3, 13-4, 13-5) derart ausgelegt sind, dass bei stillstehendem Rotor (14) die Anstellwinkel der Schaufeln auf einen Wert festgelegt sind, der aus zwei vorbestimmten Werten ausgewählt ist.

3. Rotor nach Anspruch 1, wobei die Schaufeln (10-1, 10-2, 10-3, 10-4, 10-5) und die Maschenstrukturen (13-1, 13-2, 13-3, 13-4, 13-5) derart ausgelegt sind, dass bei stillstehendem Rotor (14) die Anstellwinkel der Schaufeln auf einen Wert festgelegt sind, der aus drei vorbestimmten Werten ausgewählt ist.

4. Rotor nach Anspruch 1, wobei die Schaufeln (10-1, 10-2, 10-3, 10-4, 10-5) und die Maschenstrukturen (13-1, 13-2, 13-3, 13-4, 13-5) derart ausgelegt sind, dass bei stillstehendem Rotor (14) die Anstellwinkel der Schaufeln alle unterschiedlich voneinander sind.

5. Rotor nach einem der Ansprüche 1 bis 4, wobei die Schaufeln (10-1, 10-2, 10-3, 10-4, 10-5) und die Maschenstrukturen (13-1, 13-2, 13-3, 13-4, 13-5) derart ausgelegt sind, dass, wenn sich der Rotor (14) mit einer vorbestimmten Drehzahl (ω) dreht, die Anstellwinkel (θ1, θ2, θ3, θ4, θ5) der Schaufeln (10-1, 10-2, 10-3, 10-4, 10-5) identisch sind.

6. Rotor nach einem der Ansprüche 1 bis 5, wobei der Rotor (14) durch additive Fertigung einstückig hergestellt ist.

7. Rotor nach Anspruch 6, wobei der Rotor (14) durch Aufschmelzen auf einem Pulverbett aus einer einzigen Metalllegierung einstückig hergestellt ist.

8. Turbomaschine (50), die einen Rotor (14) nach einem der Ansprüche 1 bis 7 umfasst.

9. Turbomaschine nach Anspruch 8, wobei die Turbomaschine eine Turbine für eine Turbopumpe mit kryogenem Treibstoff oder eine Pumpe für eine Turbopumpe mit kryogenem Treibstoff ist.

10. Turbomaschine nach Anspruch 8, wobei die Turbomaschine eine Turbine oder ein Verdichter für ein Turbostrahltriebwerk oder Turboprop-Triebwerk ist.

## Claims

1. A rotor (14) for a turbomachine (50), comprising:
a disc (16) able to be mounted on a shaft of the turbomachine (50); and
a plurality of blades (10-1, 10-2, 10-3, 10-4, 10-5) fixed to the disc (16),
the rotor being **characterized in that**:
each blade (10-1, 10-2, 10-3, 10-4, 10-5) of the plurality of blades is fixed to the disc (16) via a lattice structure (13-1, 13-2, 13-3, 13-4, 13-5) configured so that a tensile force applied to the lattice structure induces a change in the angle of incidence of the blade (10-1, 10-2, 10-3, 10-4, 10-5); and **in that**
the blades (10-1, 10-2, 10-3, 10-4, 10-5) and the lattice structures (13-1, 13-2, 13-3, 13-4, 13-5) are configured so that, when the rotor (14) is stationary, the distribution of the angles of incidence (θ1, θ2, θ3, θ4, θ5) of the blades (10-1, 10-2, 10-3, 10-4, 10-5) around the disc (16) is aperiodic.

2. The rotor according to claim 1, wherein the blades (10-1, 10-2, 10-3, 10-4, 10-5) and the lattice structures (13-1, 13-2, 13-3, 13-4, 13-5) are configured so that, when the rotor (14) is stationary, the angles of incidence of the blades are set to a value chosen among two predetermined values.

3. The rotor according to claim 1, wherein the blades (10-1, 10-2, 10-3, 10-4, 10-5) and the lattice structures (13-1, 13-2, 13-3, 13-4, 13-5) are configured so that, when the rotor (14) is stationary, the angles of incidence of the blades are set to a value chosen among three predetermined values.

4. The rotor according to claim 1, wherein the blades (10-1, 10-2, 10-3, 10-4, 10-5) and the lattice structures (13-1, 13-2, 13-3, 13-4, 13-5) are configured so that, when the rotor (14) is stationary, the angles of incidence of the blades are all different from each other.

5. The rotor according to any one of claims 1 to 4, wherein the blades (10-1, 10-2, 10-3, 10-4, 10-5) and the lattice structures (13-1, 13-2, 13-3, 13-4, 13-5) are configured so that, when the rotor (14) is rotating at a predetermined rotational speed (ω), the angles of incidence (θ1, θ2, θ3, θ4, θ5) of the blades (10-1, 10-2, 10-3, 10-4, 10-5) are identical.

6. The rotor according to any one of claims 1 to 5, wherein the rotor (14) is manufactured in one piece by additive manufacturing.

7. The rotor according to claim 6, wherein the rotor (14) is manufactured in one piece by a powder bed melting of a single metal alloy.

8. A turbomachine (50) comprising a rotor (14) according to any one of claims 1 to 7.

9. The turbomachine according to claim 8, which turbomachine is a turbine for a cryogenic propellant turbopump or a pump for a cryogenic propellant turbopump.

10. The turbomachine according to claim 8, which turbomachine is a turbine or a compressor for a turbojet engine or a turboprop.
